# EUROPÄISCHE PATENTSCHRIFT

(11) **EP 3 921 902 B1**
(45) Veröffentlichungstag und Bekanntmachung des Hinweises auf die Patenterteilung: **29.05.2024**
(21) Anmeldenummer: 20702112.2
(22) Anmeldetag: 24.01.2020
(51) Int. Cl.: H01T 13/05, H01T 13/41

(54) **ZÜNDKERZENVERBINDUNGSELEMENT UND ZÜNDKERZE**
SPARK PLUG CONNECTING ELEMENT AND SPARK PLUG
ÉLÉMENT DE CONNEXION DE BOUGIE D'ALLUMAGE ET BOUGIE D'ALLUMAGE

(30) Priorität: 07.02.2019 DE 102019201574; 23.10.2019 DE 102019216340
(43) Veröffentlichungstag der Anmeldung: 15.12.2021
(73) Patentinhaber: Robert Bosch GmbH, 70442 Stuttgart (DE)
(72) Erfinder: REINSCH, Benedikt, 72585 Riederich (DE); VONAU, Corinna, 70469 Stuttgart (DE); NUFER, Stefan, 70565 Stuttgart (DE); BRAUN, Hubertus, 71272 Renningen (DE); KUENZEL, Carsten, 71732 Tamm (DE)
(86) Internationale Anmeldenummer: PCT/EP2020/051818
(87) Internationale Veröffentlichungsnummer: WO 2020/160941

(56) Entgegenhaltungen:
- EP-A1- 3 163 692
- EP-A2- 1 592 101
- WO-A1-01/74731

## Beschreibung

### Stand der Technik

Die vorliegende Erfindung betrifft ein Zündkerzenverbindungselement und eine Zündkerze mit verbesserter Resistenz gegenüber Oxidation.

Zündkerzen, die in einer Verbrennungskammer einer Brennkraftmaschine angeordnet sind, weisen, um die elektromagnetische Verträglichkeit der Zündkerzen zu verbessern, einen spezifischen elektrischen Widerstand von 1 bis 14 kΩ auf, wie z.B. aus EP 3 163 692 A bekannt. Typischerweise wird hierbei ein Zündkerzenverbindungselement verwendet, das einen elektrischen Anschluss der Zündkerze mit dem Fuß einer Mittelelektrode verbindet, und das Glas, kristalline Oxide und mindestens ein anorganisches nicht-oxidisches elektrisch leitfähiges Material, meistens Ruß, umfasst wie z.B. aus WO 01/74731 A bekannt. Auch kann das Zündkerzenverbindungselement aus mehreren Einzelkomponenten bestehen, je nach einzustellendem elektrischen Widerstand bzw. elektrischer Leitfähigkeit. Während des Herstellprozesses der Zündkerze werden hohe Temperaturen angewandt, was zur Oxidation der nicht-oxidischen elektrisch leitfähigen Materialien und damit zur Degradation des elektrischen Widerstandswerts des Zündkerzenverbindungselements führt. Eine derartige Oxidation kann auch während des bestimmungsgemäßen Gebrauchs der Zündkerze stattfinden.

### Offenbarung der Erfindung

Das erfindungsgemäße Zündkerzenverbindungselement zeichnet sich hingegen durch eine sehr hohe Oxidationsbeständigkeit und damit bei dauerhaft stabilem hohem elektrischem Widerstand durch eine sehr lange Haltbarkeit aus. Das Zündkerzenverbindungselement umfasst dabei ein erstes Kontaktelement, ein zweites Kontaktelement und ein Widerstandselement, wobei das Widerstandselement zwischen dem ersten Kontaktelement und dem zweiten Kontaktelement angeordnet ist. Das erste Kontaktelement ist in einer Zündkerze ferner mit dem elektrischen Anschluss der Zündkerze verbunden. Das zweite Kontaktelement ist in der Zündkerze mit dem Fuß der Mittelelektrode verbunden. Das Widerstandselement dient dazu, der Zündkerze einen spezifischen Gesamtwiderstand zu verleihen, während das erste und auch das zweite Kontaktelement die elektrische Leitfähigkeit zwischen den angrenzenden Bauteilen verbessern.

Erfindungsgemäß werden eine hohe Oxidationsbeständigkeit und ein guter Widerstandswert des Zündkerzenverbindungselements dadurch erzielt, dass das erste Kontaktelement und das zweite Kontaktelement eine spezifische Leitfähigkeit von 10² S/m bis 10⁸ S/m und das Widerstandselement eine spezifische Leitfähigkeit von 10⁻³ S/m bis 10¹ S/m aufweist. Die spezifische Leitfähigkeit kann dabei gemäß DIN 1324 (Mai 1988) ermittelt werden.

Aufgrund des erfindungsgemäßen Zündkerzenverbindungselements wird eine sehr gute Haltbarkeit desselben erzielt und ein stabil einstellbarer Widerstandswert erhalten.

Die Unteransprüche zeigen bevorzugte Weiterbildungen der Erfindung.

Um den Widerstandswert des Widerstandselements und damit auch den Widerstandswert einer Zündkerze besonders einfach und stabil einstellen zu können, enthält das erste Kontaktelement und/oder das zweite Kontaktelement und/oder das Widerstandselement mindestens ein erstes Oxid. Besonders vorteilhaft, aufgrund der geringen Oxidierbarkeit, enthalten sowohl das erste Kontaktelement, als auch das zweite Kontaktelement und auch das Widerstandselement mindestens ein erstes Oxid.

Das erste Oxid ist dabei ausgewählt aus der Gruppe bestehend aus Oxiden der nachfolgenden allgemeinen Formel (1):

M₁₋ₓDₓO₂ Formel (1)

wobei M ausgewählt ist aus Ti, Zr, Sn und Kombinationen daraus, D ausgewählt ist aus V, Nb, Ta, P, As, Sb, Bi und Kombinationen daraus und 0 < x < 0,5.

Alternativ oder additiv dazu ist das erste Oxid mindestens eines der nachfolgenden allgemeinen Formel (2):

Zn_{1-y}Q_{y}O Formel (2),

wobei Q ausgewählt ist aus Al, Ga, In, B, Ti, Zr, Hf, Si, Ge, Sn und Kombinationen daraus und 0 < y < 0,5.

Bei den ersten Oxiden der allgemeinen Formel (1) und der allgemeinen Formel (2) handelt es sich um dotierte elektrisch leitfähige Oxide.

Als weitere alternative oder additive Möglichkeit ist das erste Oxid mindestens eines, ausgewählt aus der Gruppe bestehend aus: ZrO₂₋ᵣ, TiO₂₋ᵣ, SnO₂₋ᵣ, ZnO₁₋ᵣ, HfO₂₋ᵣ, V₂O₅₋ᵣ, Nb₂O₅₋ᵣ und Ta₂O₅₋ᵣ, mit 0,5 > r ≥ 0. Vorzugsweise ist r = 0,0001 bis 0,1. Bei diesen Oxiden handelt es sich um reduzierte elektrisch leitfähige Materialien.

Die vorstehend genannten, erfindungsgemäß eingesetzten ersten Oxide sind kristalline Oxide und zeichnen sich durch eine gute elektrische Leitfähigkeit aus. Sie können einzeln eingesetzt oder beliebig miteinander kombiniert werden. Sie sind bei bestimmungsgemäßem Gebrauch des Zündkerzenverbindungselements im Wesentlichen nicht oxidierbar, so dass das Zündkerzenverbindungselement eine dauerhaft gute Resistenz gegenüber Oxidation und damit eine sehr gute Haltbarkeit bei stabil einstellbarem Widerstandswert aufweist.

Weiter vorteilhaft im Sinne einer reduzierten Oxidierbarkeit ist das erste Kontaktelement und/oder das zweite Kontaktelement und/oder das Widerstandselement (8) frei von Metallen und kohlenstoffhaltigen Verbindungen und insbesondere ist das erste Kontaktelement und/oder das zweite Kontaktelement und/oder das Widerstandselement frei von anorganischen, nicht-oxidischen elektrisch leitfähigen Materialien, Metallen und Legierungen. Dies bedeutet, dass der Zusammensetzung des jeweiligen bzw. entsprechenden Elements (oder auch der Elemente) des Zündkerzenverbindungselements keine anorganischen, nicht-oxidischen elektrisch leitfähigen Materialien, Metalle und Legierungen zugefügt sind. Ein Gehalt dieser Verbindungen beträgt damit, bis auf technisch unvermeidbare Rückstände, 0 Masse%, bezogen auf die Gesamtmasse des entsprechenden Elements. Sind beispielsweise beide Kontaktelemente oder mindestens ein Kontaktelement und das Widerstandselement oder auch das erste Kontaktelement, das zweite Kontaktelement und das Widerstandselement frei von anorganischen, nicht-oxidischen elektrisch leitfähigen Materialien, Metallen und Legierungen, so gilt für jedes dieser Elemente, dass der Gehalt an anorganischen, nicht-oxidischen elektrisch leitfähigen Materialien, Metallen und Legierungen, bis auf technisch unvermeidbare Rückstände, 0 Masse% beträgt.

Zu den zu vermeidenden anorganischen nicht-oxidischen elektrisch leitfähigen Materialien sind z.B. Ruß, Graphit und Carbide, und unter den Carbiden Siliciumcarbid, Wolframcarbid, Eisencarbid, Borcarbid, Titancarbid, Zirkoniumcarbid, Hafniumcarbid, Vanadiumcarbid, Niobcarbid, Tantalcarbid, Molybdäncarbid und Mischungen daraus, zu verstehen. Zu vermeidende Metalle sind beispielsweise Eisen, Wolfram, Titan, Kupfer, Silber und Mischungen daraus sowie metallische Legierungen.

Zur Verbesserung der Stabilität des Zündkerzenverbindungselements und ferner zur Verbesserung des Widerstandswerts desselben, enthält das erste Kontaktelement und/oder das zweite Kontaktelement und/oder das Widerstandselement vorteilhafterweise ferner mindestens ein zweites Oxid, das ein anorganisches amorphes Oxid ist. Unter einem anorganischen amorphen Oxid wird erfindungsgemäß ein Glas verstanden, das aus einem oder mehreren Metalloxiden gebildet wird. Das Glas ist dabei im Wesentlichen nicht beschränkt und wird im Hinblick auf den einzustellenden Widerstandswert und seine Temperaturbeständigkeit ausgewählt.

Vorteilhaft wird als zweites Oxid insbesondere ein Silikatglas verwendet, da Silikatgläser sehr stabil und dabei elektrisch gut isolierend sind. Sie bilden eine sehr gute Matrix für das erste Oxid. Aus vorstehend genannten Gründen ist das Glas vorzugsweise ein Borsilikatglas, wie insbesondere ein Lithium-Borsilikatglas, ein Lithium-Calcium-Borsilikatglas oder ein Natrium-Borsilikatglas.

Eine besonders vorteilhafte Zusammensetzung eines Glases (die Mengenangaben beziehen sich auf die Gesamtmasse dieser Zusammensetzung) ist:
SiO₂: 35 bis 65 Masse%,
B₂O₃: 20 bis 55 Masse%,
LiO₂: 0,5 bis 10 Masse%,
Na₂O: 0 bis 10 Masse%,
K₂O: maximal 2 Masse%,
CaO: 0 bis 15 Masse%,
SrO: 0 bis 15 Masse%,
BaO: 0 bis 10 Masse%,
MgO: 0 bis 15 Masse%,
Al₂O₃: 0 bis 15 Masse% und
PbO: 0 bis 5 Masse%.

Weiter vorteilhaft enthält das erste Kontaktelement und/oder das zweite Kontaktelement und/oder das Widerstandselement mindestens ein drittes Oxid, das ein kristallines Oxid, ausgewählt aus ZrO₂, TiO₂, Al₂O₃ und Mischungen daraus ist. Durch diese dritte Oxid kann der elektrische Widerstand des Zündkerzenverbindungselements verbessert werden.

Gemäß einer weiteren vorteilhaften Ausführungsform beträgt der Gesamtgehalt an erstem Oxid in dem ersten Kontaktelement und/oder in dem zweiten Kontaktelement und/oder in dem Widerstandselement maximal 100 Masse%, insbesondere 40 bis 95 Masse% und insbesondere 60 bis 85 Masse%, jeweils bezogen auf die Gesamtmasse des jeweiligen Elements. Wird das erste Oxid in einem der Elemente des Zündkerzenverbindungselements mit einem Gehalt von 100 Masse% eingesetzt, besteht das entsprechende Element aus dem ersten Oxid. D.h. es sind keine anderen Oxide oder andere Materialien zugesetzt. Durch diese Ausführungsform lässt sich ein gewünschter Widerstandswert bzw. eine gewünschte Leitfähigkeit besonders einfach einstellen.

Eine Anpassung des Gehalts an erstem Oxid im Bereich von 40 bis 95 Masse% und insbesondere von 60 bis 85 Masse% ermöglicht den Zusatz weiterer Komponenten zu dem Zündkerzenverbindungselement, insbesondere den Zusatz mindestens eines zweiten Oxids, das die Stabilität des Zündkerzenverbindungselements verbessern und den elektrischen Widerstand des Widerstandselements bzw. die Leitfähigkeit des ersten Kontaktelements und/oder des zweiten Kontaktelements stabilisieren kann.

Aus den vorstehend genannten Gründen ist es weiter vorteilhaft, dass der Gesamtgehalt an zweitem Oxid in dem ersten Kontaktelement und/oder in dem zweiten Kontaktelement und/oder in dem Widerstandselement mehr als 0 bis 75 Masse%, insbesondere mehr als 0 bis 45 Masse%, insbesondere 20 bis 40 Masse% und insbesondere 28 bis 38 Masse%, jeweils bezogen auf die Gesamtmasse des jeweiligen Elements (erstes Kontaktelement, zweites Kontaktelement, Widerstandselement) beträgt.

In einer weiteren Ausführungsform enthält das Zündkerzenverbindungselement ein drittes Oxid, um den Widerstandswert des Widerstandselements bzw. die Leitfähigkeit des ersten Kontaktelements und/oder des zweiten Kontaktelements noch einfacher anpassen zu können. Der Gesamtgehalt an drittem Oxid in dem ersten Kontaktelement und/oder in dem zweiten Kontaktelement und/oder in dem Widerstandselement beträgt daher vorteilhafterweise mehr als 0 bis 20 Masse%, insbesondere 2 bis 10 Masse% und insbesondere 3 bis 5 Masse%, jeweils bezogen auf die Gesamtmasse des jeweiligen Elements.

In einer besonders bevorzugten Ausführungsform besteht das erste Kontaktelement und/oder das zweite Kontaktelement und/oder das Widerstandselement aus mindestens einem ersten Oxid und mindestens einem Additiv. Der Gesamtgehalt an Additiv, bezogen auf die Gesamtmasse des jeweiligen Elements, beträgt dabei weniger als 5 Masse%, insbesondere weniger als 0,5 Masse% und kann auch 0 Masse% betragen. Besonders bevorzugt bestehen das erste Kontaktelement, das zweite Kontaktelement und das Widerstandselement aus mindestens einem ersten Oxid und mindestens einem Additiv, wobei der Gesamtgehalt an Additiv in jedem der Elemente weniger als 5 Masse% und insbesondere weniger als 0,5 Masse% beträgt und auch 0 Masse% betragen kann.

Mit anderen Worten kann das erste Kontaktelement und/oder das zweite Kontaktelement und/oder das Widerstandselement einzig aus dem ersten Oxid bestehen. Ein solches Element lässt sich sehr einfach herstellen, da keine spezifischen Verfahrensschritte zum Vermengen unterschiedlicher Materialien angewendet werden müssen. Hilfreich kann jedoch ein Zusatz von Additiven, wie z.B. ein Bindemittel, sein, das jedoch häufig bei der Fertigstellung des Zündkerzenverbindungselements unter Temperatureinwirkung zersetzt wird und damit in der fertiggestellten Zündkerzenelektrode nicht mehr nachweisbar ist.

Optional kann das erste Kontaktelement und/oder das zweite Kontaktelement und/oder das Widerstandselement ferner mindestens ein zweites Oxid und optional auch mindestens ein drittes Oxid enthalten. Hierbei sind insbesondere die vorstehend für das zweite Oxid und das dritte Oxid offenbarten Gesamtmengen, bezogen auf die Gesamtmasse des jeweiligen Elements, anwendbar.

Ebenfalls erfindungsgemäß wird auch eine Zündkerze beschrieben, die mindestens ein wie vorstehend offenbartes Zündkerzenverbindungselement umfasst. Aufgrund der spezifischen Leitfähigkeiten des ersten Kontaktelements und des zweiten Kontaktelements sowie der spezifischen Leitfähigkeit (des spezifischen Widerstandes) des Widerstandselements des Zündkerzenverbindungselements zeichnet sich die Zündkerze durch eine sehr hohe Oxidationsbeständigkeit, auch bei bestimmungsgemäßem Gebrauch und damit durch eine hohe chemische und damit auch mechanische Stabilität aus.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine teilgeschnittene Ansicht einer Zündkerze gemäß einer ersten Ausführungsform der Erfindung und
- Figur 2: eine schematische Schnittansicht eines Widerstandselements gemäß einer zweiten Ausführungsform der Erfindung.

### Ausführungsformen der Erfindung

In den Figuren sind nur die wesentlichen Merkmale der Erfindung dargestellt. Alle übrigen Merkmale sind der Übersichtlichkeit halber weggelassen. Ferner beziffern gleiche Bezugszeichen gleiche Bauteile.

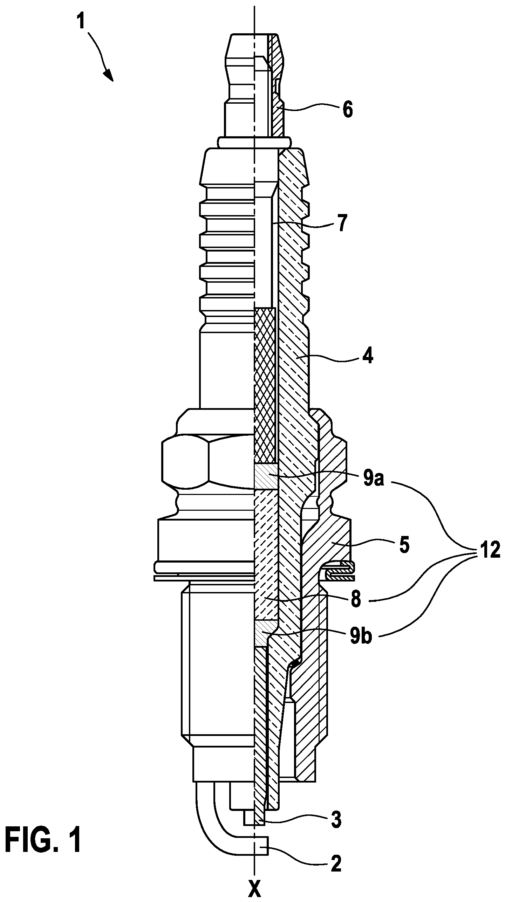

Wie aus Figur 1 ersichtlich ist, umfasst die Zündkerze 1 gemäß einer ersten Ausführungsform eine Masseelektrode 2 und eine Mittelelektrode 3. Ein Isolator 4 ist derart vorgesehen, dass die Mittelelektrode 3 in bekannter Weise etwas vom Isolator 4 vorsteht. Der Isolator 4 selbst ist teilweise von einem Gehäuse 5 umgeben. Das Bezugszeichen 6 bezeichnet eine elektrische Anschlussmutter 6. Von der elektrischen Anschlussmutter 6 ist eine elektrisch leitfähige Verbindung über einen Anschlussbolzen 7, ein erstes Kontaktelement 9a, ein Widerstandselement 8 und ein zweites Kontaktelement 9b zur Mittelelektrode 3 vorgesehen. Das erstes Kontaktelement 9a, das zweites Kontaktelement 9b und das zwischen dem ersten Kontaktelement 9a und dem zweiten Kontaktelement 9b angeordnete Widerstandselement 8 werden zusammen als Zündkerzenerfindungselement 12 angeführt. Das erste Kontaktelement 9a und das zweite Kontaktelement 9b weisen eine spezifische Leitfähigkeit von 10² S/m bis 10⁸ S/m auf. Hierdurch wird die von der elektrischen Anschlussmutter 6 über den Anschlussbolzen 7 auf das erste Kontaktelement 9a übertragene Spannung weitestgehend widerstandsfrei weitergeleitet. Auch wird die vom Widerstandselement 8 über das zweite Kontaktelement 9b an die Mittelelektrode 3 weitergeleitete Spannung durch das zweite Kontaktelement 9b aufgrund der sehr gut leitenden Eigenschaften weitestgehend verlustfrei weitergeleitet. Mit anderen Worten weisen das erste Kontaktelement 9a und das zweite Kontaktelement 9b eine hohe elektrische Leitfähigkeit und damit einen geringen elektrischen Widerstand auf.

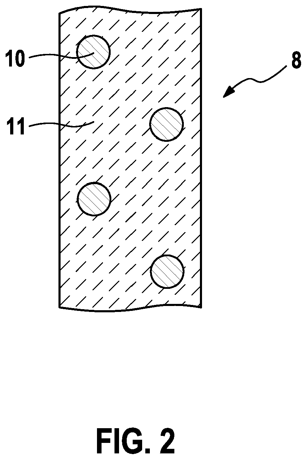

Das Widerstandselement 8, das in Figur 2 im Detail dargestellt ist, weist eine sehr gute Oxidationsbeständigkeit und damit verbunden einen dauerhaft stabilen Widerstandswert auf. Hierdurch sind nicht nur die chemische und damit auch die mechanische Stabilität des Zündkerzenelements 8, sondern auch die entsprechenden Eigenschaften der Zündkerze 1 verbessert. Die Zündkerze 1 hat damit auch bei bestimmungsgemäßem Gebrauch eine lange Haltbarkeit.

Figur 2 ist eine schematische Schnittansicht des Widerstandselements 8 aus Figur 1. Das Widerstandselement 8 hat eine spezifische Leitfähigkeit von 10⁻³ S/m bis 10¹ S/m und umfasst mindestens ein erstes Oxid 11.

Das erste Oxid 11 kann ein Oxid der nachfolgenden allgemeinen Formel (1) oder Mischungen dieser unter Formel (1) fallenden Oxide sein:

M₁₋ₓDₓO₂ Formel (1).

In Formel (1) ist M ausgewählt aus Ti, Zr, Sn und Kombinationen daraus, D ist ausgewählt aus V, Nb, Ta, P, As, Sb, Bi und Kombinationen daraus und x erfüllt folgende Relation: 0 < x < 0,5.

Alternativ oder additiv zu dem oder den Oxiden der Formel (1) kann das erste Oxid 11 auch mindestens ein Oxid der nachfolgenden allgemeinen Formel (2) umfassen:

Zn_{1-y}Q_{y}O Formel (2).

In Formel (2) ist Q ausgewählt aus Al, Ga, In, B, Ti, Zr, Hf, Si, Ge, Sn und Kombinationen daraus und y erfüllt die folgende Relation: 0 < y < 0,5.

Alternativ oder additiv zu dem Oxid bzw. den Oxiden der Formeln (1) und (2) kann das erste Oxid 11 auch ein Oxid umfassen, das aus der Gruppe bestehend aus: ZrO₂₋ᵣ, TiO₂₋ᵣ, SnO₂₋ᵣ, ZnO₁₋ᵣ, HfO₂₋ᵣ, V₂O₅₋ᵣ, Nb₂O₅₋ᵣ und Ta₂O₅₋ᵣ ausgewählt ist. r erfüllt dabei die Relation 0,5 > r ≥ 0.

Die vorstehend genannten Oxide können jeweils einzeln oder aber in beliebigen Kombinationen eingesetzt werden. Der Gesamtanteil an erstem Oxid 11 beträgt dabei insbesondere 60 bis 85 Masse%, bezogen auf die Gesamtmasse des Widerstandselements 8.

Das Widerstandselement 8 ist frei von anorganischen, nicht-oxidischen elektrisch leitfähigen Materialien, Metallen und Legierungen.

Neben dem ersten Oxid 11 enthält das Widerstandselement 8 mindestens ein zweites Oxid 10, das ein anorganisches amorphes Oxid ist. Das zweite Oxid 10 liegt in Form eines Glases vor und bildet z.T. eine Matrix für das kristalline erste Oxid 11. Dadurch wird eine sehr hohe Stabilität des Widerstandselements 8 erzielt. Das Glas ist aufgrund seiner hohen Stabilität auch bei hohen Temperaturen insbesondere ein Silikatglas.

Der Gesamtgehalt an zweitem Oxid 10 beträgt insbesondere 5 bis 30 Masse%, bezogen auf die Gesamtmasse des Widerstandselements 8, so dass eine besonders stabile oxidische Matrix des Widerstandselements 8 erhalten wird.

Optional kann das Widerstandselement 8 mindestens ein drittes Oxid enthalten, das ausgewählt ist aus ZrO₂, TiO₂, Al₂O₃ und Mischungen daraus.

Das Widerstandselement 8 zeichnet sich durch eine besonders hohe Oxidationsbeständigkeit aus, so dass bei der Herstellung einer Zündkerze unter Verwendung des Widerstandselements 8 keine Degradation des Materials des Widerstandselements 8 stattfindet. Dadurch kann der gewünschte Widerstandswert dauerhaft stabil gehalten werden. Das Widerstandselement 8 weist auch bei bestimmungsgemäßem Gebrauch somit nicht nur eine hohe chemische Stabilität, sondern auch eine sehr gute mechanische Stabilität auf.

Das erste Kontaktelement 9a und das zweite Kontaktelement 9b können in der chemischen Zusammensetzung ähnlich wie das Widerstandselement 8 aufgebaut sein, also ebenfalls ein erstes Oxid (11), optional ein zweites Oxid (10) und optional ein drittes Oxid, wie vorstehend definiert, umfassen und insbesondere frei sein von Metallen und kohlenstoffhaltigen Verbindungen. Die Zusammensetzungen unterscheiden sich aber insoweit, dass das erste Kontaktelement (9a) und das zweite Kontaktelement (9b) eine spezifische Leitfähigkeit von 10² S/m bis 10⁸ S/m aufweisen. Dies kann durch unterschiedliche Dotierungen der entsprechenden Oxide oder aber durch unterschiedliche Gehalte der Oxide erzielt werden. Das erste Kontaktelement 9a und das zweite Kontaktelement 9b zeichnen sich ebenfalls durch eine gute Oxidationsbeständigkeit bei gleichzeitig sehr hoher elektrischer Leitfähigkeit aus.

## Patentansprüche

1. Zündkerzenverbindungselement umfassend ein erstes Kontaktelement (9a) und ein zweites Kontaktelement (9b), wobei zwischen dem ersten Kontaktelement (9a) und dem zweiten Kontaktelement (9b) ein Widerstandselement (8) angeordnet ist, **dadurch gekennzeichnet, dass** das erste Kontaktelement (9a) und das zweite Kontaktelement (9b) eine spezifische Leitfähigkeit von 10² S/m bis 10⁸ S/m aufweisen und das Widerstandselement (8) eine spezifische Leitfähigkeit von 10⁻³ S/m bis 10¹ S/m aufweist.

2. Zündkerzenverbindungselement nach Anspruch 1, wobei das erste Kontaktelement (9a) und/oder das zweite Kontaktelement (9b) und/oder das Widerstandselement (8) mindestens ein erstes Oxid (11) enthält, ausgewählt aus der Gruppe bestehend aus dotierte elektrisch leitfähige Oxiden der nachfolgenden allgemeinen Formel (1):
M₁₋ₓDₓO₂ Formel (1)
wobei M ausgewählt ist aus Ti, Zr, Sn und Kombinationen daraus, D ausgewählt ist aus V, Nb, Ta, P, As, Sb, Bi und Kombinationen daraus und 0 < x < 0,5
und/oder dotierte elektrisch leitfähige Oxiden der nachfolgenden allgemeinen Formel (2):
Zn_{1-y}Q_{y}O Formel (2),
wobei Q ausgewählt ist aus Al, Ga, In, B, Ti, Zr, Hf, Si, Ge, Sn und Kombinationen daraus und 0 < y < 0,5
und/oder reduzierte elektrisch leitfähige Oxiden, ausgewählt aus der Gruppe bestehend aus: ZrO₂₋ᵣ, TiO₂₋ᵣ, SnO₂₋ᵣ, ZnO₁₋ᵣ, HfO₂₋ᵣ, V₂O₅₋ᵣ, Nb₂O₅₋ᵣ und Ta₂O₅₋ᵣ, mit 0,5 > r > 0.

3. Zündkerzenverbindungselement nach Anspruch 1 oder 2,
wobei das erste Kontaktelement (9a) und/oder das zweite Kontaktelement (9b) und/oder das Widerstandselement (8) frei ist von Metallen und kohlenstoffhaltigen Verbindungen.

4. Zündkerzenverbindungselement nach einem der vorhergehenden Ansprüche, wobei das erste Kontaktelement (9a) und/oder das zweite Kontaktelement (9b) und/oder das Widerstandselement (8) frei ist von anorganischen, nicht-oxidischen elektrisch leitfähigen Materialien, Metallen und Legierungen.

5. Zündkerzenverbindungselement nach einem der vorhergehenden Ansprüche, wobei das erste Kontaktelement (9a) und/oder das zweite Kontaktelement (9b) und/oder das Widerstandselement (8) ferner mindestens ein zweites Oxid (10) enthält, das ein anorganisches amorphes Oxid ist.

6. Zündkerzenverbindungselement nach Anspruch 5, wobei das zweite Oxid (10) ein Glas, insbesondere ein Silikatglas ist.

7. Zündkerzenverbindungselement nach einem der vorhergehenden Ansprüche, wobei das erste Kontaktelement (9a) und/oder das zweite Kontaktelement (9b) und/oder das Widerstandselement (8) ferner mindestens ein drittes Oxid enthält, das ein kristallines Oxid, ausgewählt aus ZrO₂, TiO₂, Al₂O₃ und Mischungen daraus ist.

8. Zündkerzenverbindungselement nach einem der Ansprüche 2 bis 7, wobei der Gesamtgehalt an erstem Oxid (11) in dem ersten Kontaktelement (9a) und/oder in dem zweiten Kontaktelement (9b) und/oder in dem Widerstandselement (8) maximal 100 Masse%, insbesondere 40 bis 95 Masse% und insbesondere 60 bis 85 Masse%, jeweils bezogen auf die Gesamtmasse des jeweiligen Elements (9a, 9b, 8) beträgt.

9. Zündkerzenverbindungselement nach einem der Ansprüche 5 bis 8, wobei der Gesamtgehalt an zweitem Oxid (10) in dem ersten Kontaktelement (9a) und/oder in dem zweiten Kontaktelement (9b) und/oder in dem Widerstandselement (8) mehr als 0 bis 75 Masse%, insbesondere mehr als 0 bis 45 Masse%, insbesondere 20 bis 40 Masse% und insbesondere 28 bis 38 Masse%, jeweils bezogen auf die Gesamtmasse des jeweiligen Elements (9a, 9b, 8) beträgt.

10. Zündkerzenverbindungselement nach einem der Ansprüche 7 bis 9, wobei der Gesamtgehalt an drittem Oxid in dem ersten Kontaktelement (9a) und/oder in dem zweiten Kontaktelement (9b) und/oder in dem Widerstandselement (8) mehr als 0 bis 20 Masse%, insbesondere 2 bis 10 Masse% und insbesondere 3 bis 5 Masse%, jeweils bezogen auf die Gesamtmasse des jeweiligen Elements (9a, 9b, 8) beträgt.

11. Zündkerzenverbindungselement nach einem der vorhergehenden Ansprüche, wobei das erste Kontaktelement (9a) und/oder das zweite Kontaktelement (9b) und/oder das Widerstandselement (8) aus mindestens einem ersten Oxid (11) und mindestens einem Additiv und optional mindestens einem zweiten Oxid (10) und optional mindestens einem dritten Oxid besteht, wobei der Gesamtgehalt an Additiv bezogen auf die Gesamtmasse des jeweiligen Elements (9a, 9b, 8) weniger als 5 Masse%, insbesondere weniger als 0,5 Masse% beträgt.

12. Zündkerze umfassend ein Zündkerzenverbindungselement (12) nach einem der vorhergehenden Ansprüche.

## Claims

1. Spark plug connector element comprising a first contact element (9a) and a second contact element (9b), where a resistor element (8) is disposed between the first contact element (9a) and the second contact element (9b), **characterized in that** the first contact element (9a) and the second contact element (9b) have a specific conductivity of 10² S/m to 10⁸ S/m and the resistor element (8) has a specific conductivity of 10⁻³ S/m to 10¹ S/m.

2. Spark plug connector element according to Claim 1, wherein the first contact element (9a) and/or the second contact element (9b) and/or the resistor element (8) contain(s) at least one first oxide (11) selected from the group consisting of doped electrically conductive oxides of the following general formula (1):
M₁₋ₓDₓO₂ Formula (1)
where M is selected from Ti, Zr, Sn and combinations thereof, D is selected from V, Nb, Ta, P, As, Sb, Bi and combinations thereof, 0 < x < 0.5,
and/or doped electrically conductive oxides of the following general formula (2):
Zn_{1-y}Q_{y}O Formula (2)
where Q is selected from Al, Ga, In, B, Ti, Zr, Hf, Si, Ge, Sn and combinations thereof, and 0 < y < 0.5,
and/or reduced electrically conductive oxides selected from the group consisting of: ZrO₂₋ᵣ, TiO₂₋ᵣ, SnO₂₋ᵣ, ZnO₁₋ᵣ, HfO₂₋ᵣ, V₂O₅₋ᵣ Nb₂O₅₋ᵣ and Ta₂O₅₋ᵣ, with 0.5 > r > 0.

3. Spark plug connector element according to Claim 1 or 2,
wherein the first contact element (9a) and/or the second contact element (9b) and/or the resistor element (8) is/are free of metals and carbon compounds.

4. Spark plug connector element according to any of the preceding claims, wherein the first contact element (9a) and/or the second contact element (9b) and/or the resistor element (8) is/are free of inorganic nonoxidic electrically conductive materials, metals and alloys.

5. Spark plug connector element according to any of the preceding claims, wherein the first contact element (9a) and/or the second contact element (9b) and/or the resistor element (8) also contain(s) at least a second oxide (10) which is an inorganic amorphous oxide.

6. Spark plug connector element according to Claim 5, wherein the second oxide (10) is a glass, especially a silicate glass.

7. Spark plug connector element according to any of the preceding claims, wherein the first contact element (9a) and/or the second contact element (9b) and/or the resistor element (8) also contain(s) at least a third oxide which is a crystalline oxide selected from ZrO₂, TiO₂, Al₂O₃ and mixtures thereof.

8. Spark plug connector element according to any of Claims 2 to 7, wherein the total content of first oxide (11) in the first contact element (9a) and/or in the second contact element (9b) and/or in the resistor element (8) is not more than 100% by mass, more particularly 40% to 95% by mass and more particularly 60% to 85% by mass, based in each case on the total mass of the respective element (9a, 9b, 8).

9. Spark plug connector element according to any of Claims 5 to 8, wherein the total content of second oxide (10) in the first contact element (9a) and/or in the second contact element (9b) and/or in the resistor element (8) is more than 0% to 75% by mass, more particularly more than 0% to 45% by mass, more particularly 20% to 40% by mass and more particularly 28% to 38% by mass, based in each case on the total mass of the respective element (9a, 9b, 8).

10. Spark plug connector element according to any of Claims 7 to 9, wherein the total content of third oxide in the first contact element (9a) and/or in the second contact element (9b) and/or in the resistor element (8) is more than 0% to 20% by mass, more particularly 2% to 10% by mass and more particularly 3% to 5% by mass, based in each case on the total mass of the respective element (9a, 9b, 8).

11. Spark plug connector element according to any of the preceding claims, wherein the first contact element (9a) and/or the second contact element (9b) and/or the resistor element (8) consists of at least one first oxide (11) and at least one additive and optionally at least one second oxide (10) and optionally at least one third oxide, wherein the total content of additive based on the total mass of the respective element (9a, 9b, 8) is less than 5% by mass, especially less than 0.5% by mass.

12. Spark plug comprising a spark plug connector element (12) according to any of the preceding claims.

## Revendications

1. Élément de connexion de bougie d'allumage comprenant un premier élément de contact (9a) et un deuxième élément de contact (9b), un élément résistif (8) étant agencé entre le premier élément de contact (9a) et le deuxième élément de contact (9b), **caractérisé en ce que** le premier élément de contact (9a) et le deuxième élément de contact (9b) présentent une conductivité spécifique de 10² S/m à 10⁸ S/m et l'élément résistif (8) présente une conductivité spécifique de 10⁻³ S/m à 10¹ S/m.

2. Élément de connexion de bougie d'allumage selon la revendication 1, dans lequel le premier élément de contact (9a) et/ou le deuxième élément de contact (9b) et/ou l'élément résistif (8) contiennent au moins un premier oxyde (11) choisi dans le groupe constitué par les oxydes conducteurs électriques dopés de formule générale (1) suivante :
M₁₋ₓDₓO₂ Formule (1)
dans laquelle M est choisi parmi Ti, Zr, Sn et leurs combinaisons, D est choisi parmi V, Nb, Ta, P, As, Sb,
Bi et leurs combinaisons, et 0 < x < 0,5
et/ou les oxydes conducteurs électriques dopés de formule générale (2) suivante :
Zn_{1-y}Q_{y}O Formule (2),
dans laquelle Q est choisi parmi Al, Ga, In, B, Ti, Zr, Hf, Si, Ge, Sn et leurs combinaisons, et 0 < y < 0,5
et/ou les oxydes conducteurs électriques réduits choisis dans le groupe constitué par : ZrO₂₋ᵣ, TiO₂₋ᵣ, SnO₂₋ᵣ, ZnO₁₋ᵣ, HfO₂₋ᵣ, V₂O₅₋ᵣ, Nb₂O₅₋ᵣ et Ta₂O₅₋ᵣ, avec 0,5 > r > 0.

3. Élément de connexion de bougie d'allumage selon la revendication 1 ou 2,
dans lequel le premier élément de contact (9a) et/ou le deuxième élément de contact (9b) et/ou l'élément résistif (8) sont exempts de métaux et de composés carbonés.

4. Élément de connexion de bougie d'allumage selon l'une quelconque des revendications précédentes, dans lequel le premier élément de contact (9a) et/ou le deuxième élément de contact (9b) et/ou l'élément résistif (8) sont exempts de matériaux conducteurs électriques inorganiques non oxydiques, de métaux et d'alliages.

5. Élément de connexion de bougie d'allumage selon l'une quelconque des revendications précédentes, dans lequel le premier élément de contact (9a) et/ou le deuxième élément de contact (9b) et/ou l'élément résistif (8) contiennent en outre au moins un deuxième oxyde (10) qui est un oxyde inorganique amorphe.

6. Élément de connexion de bougie d'allumage selon la revendication 5, dans lequel le deuxième oxyde (10) est un verre, notamment un verre de silicate.

7. Élément de connexion de bougie d'allumage selon l'une quelconque des revendications précédentes, dans lequel le premier élément de contact (9a) et/ou le deuxième élément de contact (9b) et/ou l'élément résistif (8) contiennent en outre au moins un troisième oxyde qui est un oxyde cristallin choisi parmi ZrO₂, TiO₂, Al₂O₃ et leurs mélanges.

8. Élément de connexion de bougie d'allumage selon l'une quelconque des revendications 2 à 7, dans lequel la teneur totale en premier oxyde (11) dans le premier élément de contact (9a) et/ou dans le deuxième élément de contact (9b) et/ou dans l'élément résistif (8) est au maximum de 100 % en masse, notamment de 40 à 95 % en masse et notamment de 60 à 85 % en masse, respectivement par rapport à la masse totale de l'élément respectif (9a, 9b, 8).

9. Élément de connexion de bougie d'allumage selon l'une quelconque des revendications 5 à 8, dans lequel la teneur totale en deuxième oxyde (10) dans le premier élément de contact (9a) et/ou dans le deuxième élément de contact (9b) et/ou dans l'élément résistif (8) est de plus de 0 à 75 % en masse, notamment de plus de 0 à 45 % en masse, notamment de 20 à 40 % en masse et notamment de 28 à 38 % en masse, respectivement par rapport à la masse totale de l'élément respectif (9a, 9b, 8).

10. Élément de connexion de bougie d'allumage selon l'une quelconque des revendications 7 à 9, dans lequel la teneur totale en troisième oxyde dans le premier élément de contact (9a) et/ou dans le deuxième élément de contact (9b) et/ou dans l'élément résistif (8) est de plus de 0 à 20 % en masse, notamment de 2 à 10 % en masse et notamment de 3 à 5 % en masse, respectivement par rapport à la masse totale de l'élément respectif (9a, 9b, 8) .

11. Élément de connexion de bougie d'allumage selon l'une quelconque des revendications précédentes, dans lequel le premier élément de contact (9a) et/ou le deuxième élément de contact (9b) et/ou l'élément résistif (8) est constitué d'au moins un premier oxyde (11) et d'au moins un additif et éventuellement d'au moins un deuxième oxyde (10) et éventuellement d'au moins un troisième oxyde, la teneur totale en additif par rapport à la masse totale de l'élément respectif (9a, 9b, 8) étant inférieure à 5 % en masse, notamment inférieure à 0,5 % en masse.

12. Bougie d'allumage comprenant un élément de connexion de bougie d'allumage (12) selon l'une quelconque des revendications précédentes.
